**Europäisches Patentamt**

**European Patent Office**

**Office européen des brevets**

(11) Numéro de publication: **0 090 693**

**B1**

## (12) FASCICULE DE BREVET EUROPÉEN

(45) Date de publication du fascicule du brevet:
03.09.86

(21) Numéro de dépôt: **83400498.8**

(22) Date de dépôt: **11.03.83**

(51) Int. Cl.⁴: **H 01 R 13/629**

(54) Dispositif de repérage de positions de cartes de circuits imprimés, par rapport à leurs connecteurs.

(30) Priorité: **17.03.82 FR 8204528**

(43) Date de publication de la demande:
**05.10.83 Bulletin 83/40**

(45) Mention de la délivrance du brevet:
**03.09.86 Bulletin 86/36**

(84) Etats contractants désignés:
**CH DE GB IT LI NL SE**

(56) Documents cité:
**FR-A-1 277 904**
**GB-A-1 173 525**
**US-A-3 414 806**
**US-A-4 037 186**

(73) Titulaire: **Ozil, Maurice, 73, rue des Morillons, F-75015 Paris (FR)**
Titulaire: **Finger, Ulrich, 30, rue du Moulin de Pierre, F-92140 Clamart (FR)**

(72) Inventeur: **Ozil, Maurice, 73, rue des Morillons, F-75015 Paris (FR)**
Inventeur: **Finger, Ulrich, 30, rue du Moulin de Pierre, F-92140 Clamart (FR)**

(74) Mandataire: **Mongrédien, André, c/o BREVATOME 25, rue de Ponthieu, F-75008 Paris (FR)**

LIBER, STOCKHOLM 1986

## Description

La présente invention concerne un dispositif de repérage de positions de cartes de circuits imprimés, par rapport à leurs connecteurs. Elle s'applique notamment, à tout ensemble fonctionnel de cartes de circuits électriques imprimés, portant des composants électriques ou logiques, dans lequel les différentes positions que peuvent occuper ces cartes par rapport à leurs connecteurs, doivent être repérées au cours du fonctionnement de l'ensemble. Ce repérage a pour but de diminuer la durée d'interruption de l'ensemble lors du retrait ou de la remise en place d'une carte, par rapport à son connecteur.

On sait qu'une carte de "circuits imprimés" portant des composants électriques et/ou logiques présente une surface d'extrémité qui porte des éléments conducteurs aptes à entrer en contact connecteur électrique. Les connecteurs électriques permettent par leurs sorties, de relier différentes cartes entre elles, ou de relier ces cartes avec colles d'un autre ensemble. Les conducteurs correspondants du connecteur et de la carte peuvent occuper trois positions relatives: une première position dite de contacts "sûrs" entre les éléments conducteurs correspondants du connecteur et de la carte; cette position de contacts sûrs est celle pour laquelle la carte est correctement en place par rapport à son connecteur et pour laquelle il est permis d'affirmer que le fonctionnement de l'ensemble de cartes est correct. Une ou plusieurs des cartes peuvent également occuper une deuxième position dite "intermédiaire" pour laquelle les contacts entre les éléments conducteurs correspondants du connecteur et de la cette sont "non sûrs". En effet, lorsqu'une carte est en cours de mise en place ou de retrait par rapport à son connecteur, il est impossible d'affirmer que le fonctionnement de l'ensemble se déroule dans de bonnes conditions puisque les contacts entre les éléments conducteurs de la carte et du connecteur ne peuvent être considérés comme correctement assurés. Enfin, il existe une troisième position d'une ou de plusieurs des cartes par rapport à leurs connecteurs; cette position est celle pour laquelle une ou plusieurs cartes sont complètement retirées du connecteur qui leur correspond, aucun contact n'étant plus établi entre les éléments conducteurs correspondants de la carte et du connecteur.

Il est connu du document FR-A-1 277 904 de répérer dans un ensemble de cartes de circuits imprimés les deux différentes positions de ces cartes par rapport à leurs connecteurs mais il n'existe actuellement aucun dispositif qui permet de répérer automatiquement, dans un ensemble de cartes de circuits électriques imprimés portant des composants électriques et/ou logiques, les trois différentes positions de ces cartes par rapport à leurs connecteurs.

Dans tout ensemble fonctionnel qui nécessite un fonctionnement permanent, le retrait d'une carte provoque une immobilisation assez longue de l'ensemble; pour éviter une trop longue immobilisation on a généralement recours à une duplication de chaque ensemble, de manière qu'il ne soit pas nécessaire d'interrompre trop longtemps l'un des ensembles, en cas de retrait d'une ou plusieurs cartes de l'autre ensemble. C'est généralement le cas dans les ensembles de cartes de circuits imprimés qui portent des mémoires et des microprocesseurs. Dans de tels ensembles, lorsqu'il est nécessaire de retirer une carte pour une intervention quelconque, différentes opérations doivent être effectuées par le technicien, de manière non automatique celui-ci doit tout d'abord envoyer des instructions de sauvegarde des données contenues dans les mémoires, Puis il doit mettre tous les processeurs ou microprocesseurs en position d'attente, il doit ensuite, si nécessaire, couper les alimentations électriques des cartes de l'ensemble pour lequel une intervention est nécessaire; enfin, le technicien doit initialiser le fonctionnement de l'ensemble dupliqué. Ces interventions non automatiques, sont longues.

L'invention a pour but de remédier à ces inconvénients et notamment de réaliser un dispositif de repérage de positions des cartes de circuits imprimes, par rapport à leurs connecteurs. Ce dispositif permet de repérer automatiquement les trois positions que chaque carte peut occuper par rapport à son connecteur. Il permet aussi d'éviter au technicien de prévoir toutes les opérations nécessaires, lors du retrait ou lors de la réinsertion d'une carte dans son connecteur. Ce dispositif présente l'important avantage d'éviter une interruption longue du fonctionnement d'un ensemble de cartes de circuits imprimés au cours de la manipulation d'une ou plusieurs cartes et, d'éviter aussi la duplication coûteuse des ensembles de cartes à fonctionnement permanent.

L'invention a pour objet un dispositif de repérage de positions de cartes de circuits électriques imprimés, par rapport à leurs connecteurs, ces cartes appartenant à un ensemble fonctionnel dans lequel chacune d'elles porte des composants logiques et présente une surface d'extrémité portant des éléments conducteurs aptes à entrer en contact avec des éléments conducteurs correspondants d'un connecteur électrique, les conducteurs correspondants du connecteur et de la carte pouvant occuper trois positions relatives: une première position dite de contacts sûrs entre les éléments conducteurs correspondants du connecteur et de la carte, la carte étant correctement en place par rapport à son connecteur, une deuxième position intermédiaire dite de contacts non sûrs entre les éléments conducteurs correspondants du connecteur et de la carte, lorsque celle-ci est en cours de mise en place ou de retrait par rapport à son connecteur, et une troisième position dite de rupture de contacts entre les éléments conducteurs correspondants du connecteur et de la carte, lorsque la carte est complètement en retrait par rapport à son connecteur, caractérisé en ce que le dispositif comporte des moyens sensibles aux positions des cartes pour fournir un signal logique d'indication de position présentant un premier état logique lorsque les cartes occupent la première position ou lorsqu'au moins une carte occupe la troisième position, le signal présentant un deuxième état logique lorsqu'au moins une carte occupe la seconde position intermédiaire.

Selon une autre caractéristique de l'invention, les moyens sensibles aux positions des cartes comprennent au moins un interrupteur présentant un contact ayant une position fixe par rapport à l'ensemble et un contact mobile, dont les déplacements par rapport au contact fixe, correspondent à la fermeture ou à l'ouverture de l'interrupteur, le contact mobile étant relié mécaniquement à chacune des cartes, de sorte que l'ouverture corresponde aux première et troisième positions et la fermeture corresponde à la deuxième position ou réciproquement, les contacts étant reliés à des moyens pour fournir ledit signal logique sur une sortie.

Selon une autre caractéristique, la sortie des moyens qui fournissent le signal logique, est relié à des moyens de commutation.

Selon une autre caractéristique, les moyens sensibles aux positions des cartes comprennent une source lumineuse et un détecteur électrooptique des positions des cartes, les cartes portant des repères correspondant aux première, deuxième et troisième positions et le détecteur fournissant sur une sortie ledit signal logique correspondant auxdites première, deuxième et troisième positions.

Selon une autre caractéristique, la sortie du détecteur est reliée à des moyens de commutation.

Selon une autre caractéristique, les moyens de commutation comprennent au moins une bascule monostable déclenchée par le signal logique et présentant une durée de conduction supérieure à la durée de maintien du signal logique entre les première et troisième positions pour effectuer, pour des composants logiques portés par les cartes des opérations de sauvogarde, d'arrêt de fonctionnement ou de réinitialisation.

Les caractéristiques et avantages de l'invention ressortiront mieux de la description qui va suivre, donnés en référence aux dessins annexés dans lesquels:

- les figures 1, 2 et 3 représentent schématiquement divers modes de réalisation du dispositif de l'invention;
- la figure 4 représente de manière plus détaillée, les moyens du dispositif qui fournissent un signal de repérage de position;
- la figure 5 représente en a le signal logique d'indication de position obtenu en sortie de l'un des moyens du dispositif et, en b un signal de commutation permettant le déclenchement de certaines opérations dans les cartes munies du dispositif de repérage;

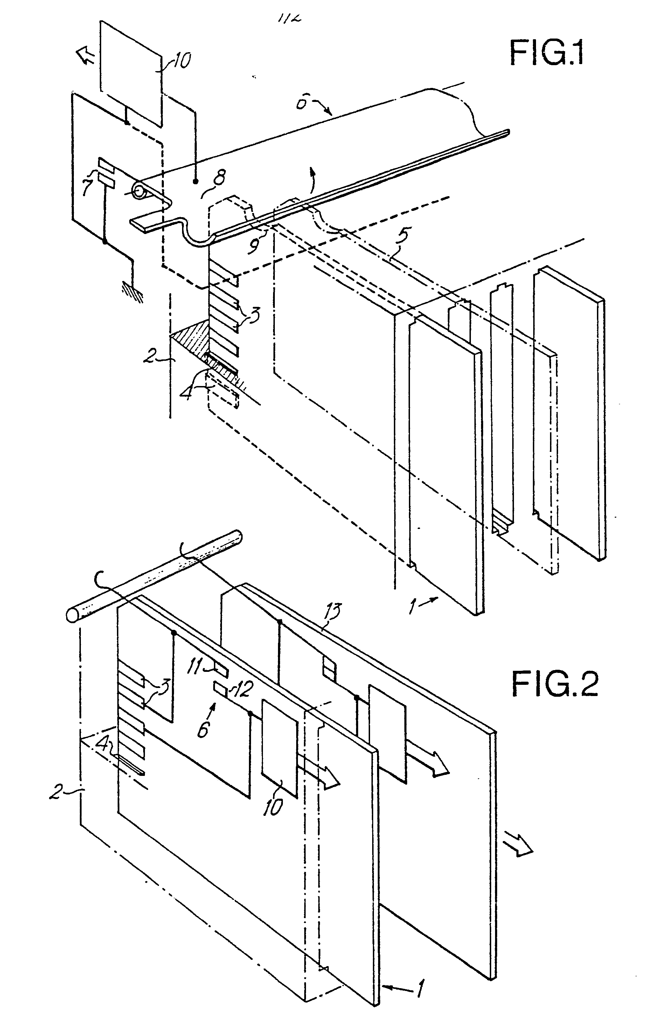

Les figures 1, 2 et 3 représentent très schématiquement divers modes de réalisation du dispositif de repérage de l'invention. Les mêmes éléments portent les mêmes références sur ces deux figures.

La figure 1 représente un premier mode de réalisation du dispositif de repérage de positions de cartes 1 de circuits imprimés, par rapport à leurs connecteurs 2, dans un ensemble fonctionnel. Chacune de ces cartes présente, sur une surface d'extrémité des éléments conducteurs 3 qui sont aptes à entrer en contact avec des éléments conducteurs correspondants 4 d'un connecteur électrique. Les connexions qui existent entre les différents connecteurs de l'ensemble ne sont pas représentées sur cette figure. La carte 1 est complètement engagée dans le connecteur 2 de telle sorte que l'on peut affirmer que dans cette première position, les contacts entre les éléments conducteurs correspondants du connecteur et de la carte sont des contacts sûrs. La carte 5 occupe une deuxième position, dite intermédiaire, par rapport à son connecteur. Cette carte est en cours de retrait ou en cours d'insertion; dans cette deuxième position intermédiaire, les contacts entre les éléments conducteurs correspondants du connecteur et de la carte, ne sont pas sûrs. Enfin, une carte peut être complètement retirée de son connecteur. Cette troisième position peut être qualifiée de position de rupture de contacts entre les éléments conducteurs correspondants du connecteur et de la carte. Le dispositif comprend des moyens sensibles aux positions des cartes aptes à fournir un signal logique 6 d'indication de position, les états logiques de ce signal dépendant des positions relatives des cartes et des connecteurs. Ces moyens sensibles comprennent ici un interrupteur 6 qui présente un contact 7 ayant une position fixe par rapport à l'ensemble des cartes, et un contact mobile 8 dont les déplacements par rapport au contact fixe, provoquent la fermeture ou l'ouverture de l'interrupteur. Le contact mobile 8 s'appuie sur chacun ne des cartes, de la façon représentée sur la figure, de sorte que lorsque toutes les cartes sont correctement engagées dans leurs connecteurs ou qu'une ou plusieurs de ces cartes sont complètement en retrait, (cartes occupant les première et troisième positions mentionnées plus haut) l'interrupteur est ouvert. L'ouverture de l'interrupteur lorsque les cartes sont correctement engagées dans leurs connecteurs, résulte de la découpe 9 effectuée sur chacune des cartes. Au contraire, lorsqu'une carte occupe la deuxième position intermédiaire (carte 5 par exemple), le contact mobile 8 se déplace vers le bas et l'interrupteur est fermé. Les moyens sensibles aux positions des cartes comprennent aussi des moyens logiques 10 reliés aux contacts de l'interrupteur pour fournir un signal logique correspondant aux états ouvert ou fermé de l'interrupteur et correspondant donc aux positions des cartes. Ces moyens logiques seront décrits plus loin en détail, ils sont, soit incorporés dans chacune desdites cartes (la distribution de ce contact se faisant sur toutes les cartes concernées par la liaison en pointillés), soit communs à l'ensemble des cartes (solution moins fiable représentée sur cette figure).

La figure 2 représente un autre mode de réalisation du dispositif de l'invention. Les moyens sensibles aux positions des cartes sont constitues ici par un ensemble d'interrupteurs 6 correspondant respectivement à chacune des cartes. Chaque interrupteur comprend un contact mobile 11 et un contact fixe 12, ces contacts sont reliés à des moyens logiques 10 pour fournir un signal logique sont les états dépendent respectivement des positions de chaque carte par rapport à son connecteur (non représenté sur cette figure). Chacun des interrupteurs 6 est en position ouverte lorsque la carte correspondante est correctement en place par rapport à son connecteur ou qu'elle est complètement retirée de celui-ci (1° ou 3° positions). Cet interrupteur est fermé lorsque la carte est soit en position de retrait, soit en position d'insertion (2° position intermédiaire). Les moyens logiques 10 comme dans la figure précédente, fournissent un signal logique représentant la fermeture ou l'ouverture de l'interrupteur et représentant donc la position de la carte correspondante. Ce signal peut être fourni a la carte elle-même pour effectuer toutes les opérations de sauvegarde, d'arrêt ou d'initialisation pour certains composants logiques de cette carte; il peut également être fourni aux autres cartes pour commander des opérations de même type. Sur cette figure, la carte 13 est dans une position intermédiaire tandis que la carte 1 est dans la première position. Le contact mobile de l'interrupteur 6, peut être relié à une masse de référence, par l'intermédiaire d'un élément conducteur 3. Les moyens logiques 10, pourraient éventuellement être placés à l'intérieur des cartes.

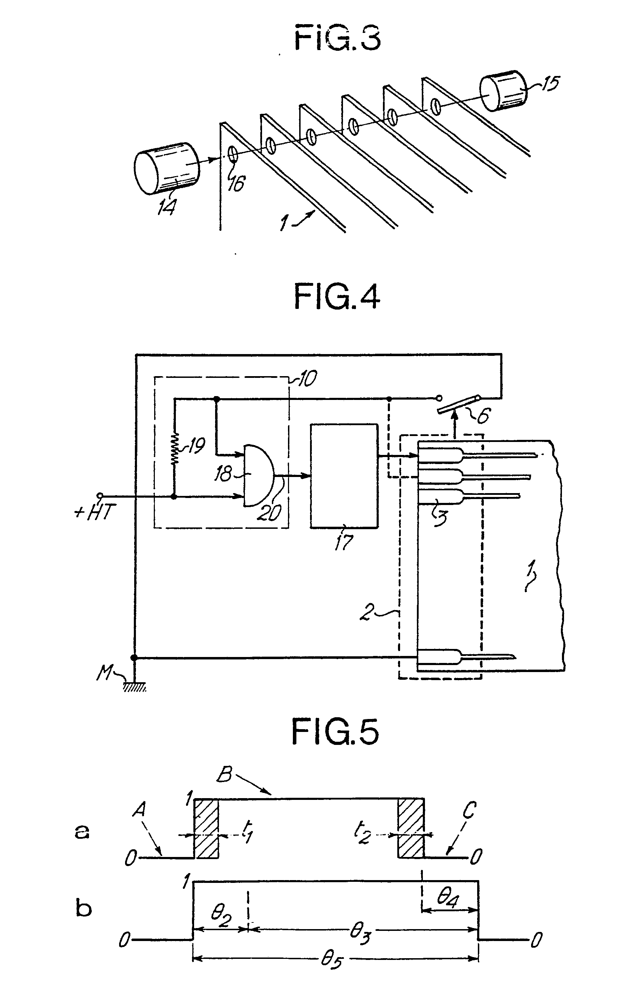

La figure 3 représente un autre mode de réalisation du dispositif de l'invention. Selon cet autre mode de réalisation, les moyens sensibles aux positions des cartes comportent une source lumineuse 14 qui émet un faisceau de rayons lumineux en direction d,un détecteur de lumière 15 à travers des ouvertures 16 réalisées dans chacune des cartes, à proximité des connecteurs (non représentés sur cette figure). Lorsque les cartes sont correctement en place dans leurs connnecteurs ou lorsqu'une ou plusieurs d'entre elles sont complètement retirées (1° ou 3° position), le détecteur 15 fournit un signal présentant un premier état logique, correspondant par exemple à l'ouverture de l'interrupteur des figures précédentes. Au contraire, lorsque l'une des cartes est en cours de retrait ou en cours d'insertion par rapport à son connecteur (2° position intermédiaire), le faisceau lumineux entre la source 14 et le détecteur 15 est interrompu; ce détecteur fournit alors un signal dont l'état logique correspond par exemple à la position fermée de l'interrupteur de la figure 4. Ce détecteur, bien connu dans l'état de la technique, peut inclure des moyens de mise en forme de signal, il ne sera pas décrit de manière plus détaillée.

La figure 4 représente de manière plus détaillée, les moyens qui permettent, pour les modes de réalisation des figures 1 et 2, de fournir un signal logique dépendant des positions des cartes et donc, des positions ouverte ou fermée de l'interrupteur 6. Sur cette figure, pour en faciliter la représentation, on n'a représenté schématiquement qu'une carte, mais il est bien évident que ce qui va être décrit s'applique a un ensemble fonctionnel de cartes de circuits imprimés portant des composants électriques et/ou logiques. Ces cartes présentent une surface d'extrémité portant des éléments conducteurs 3 qui sont reliés aux circuits imprimés sur la carte et aptes à entrer en contact avec des éléments conducteurs correspondants (non représentés) d'un connecteur 2. Le dispositif représenté sur cette figure comprend, outre les moyens sensibles aux positions des cartes constituées par l'interrupteur 6 et par les moyens logiques 10, des moyens de commutation 17, qui seront décrits plus loin en détail. Comme pour les figures 1 et 2, les moyens logiques 10 sont soit extérieurs aux cartes, soit portés par chacune des cartes.

Les moyens logiques 10 comprennent, pour les deux modes de réalisation représentés sur les figures 1 et 2, une porte 18, de type ET par exemple. L'une des entrées de cette porte est reliée à une borne d'une résistance 19 ainsi qu'à une source de haute tension +HT. Cette source peut être par exemple une source électrique d'alimentation des circuits et composants situés sur la carte 1. L'autre entrée de la porte est connectée à une autre borne de la résistance 19 ainsi qu'à une borne de l'interrupteur 6. L'autre borne de cet interrupteur est reliée à une masse de référence M qui peut également être la masse de référence des circuits et composants de la carte 1. Dans le mode de réalisation de la figure 1, il n'y a qu'un seul interrupteur 6 pour l'ensemble des cartes; il n'est possible de repérer que le retrait ou la remise en place d'une seule carte dans l'ensemble; une seule porte 7 et une seule résistance 8 sont nécessaires et le signal logique à deux états apparaissant sur la sortie 20 de la porte 18, à l'ensemble des cartes. Dans le cas où il y a un interrupteur par carte, on associe à chaque interrupteur une porte ET et une résistance. Le dispositif de l'invention comprend aussi des moyens de commutation 17 qui sont reliés à la sortie 20 de la porte 18. Ces moyens de commutation reçoivent le signal logique de la porte 18, et fournissent comme on le verra plus loin, un signal de commutation permettant, lors du retrait ou de la remise en place d'une carte, de transmettre à cette carte ainsi qu'à l'ensemble des autres cartes, des signaux intervenant sur leur fonctionnement. Ces moyens de commutation 17 peuvent être constitués par un circuit monostable ou par une bascule monostable de type déclenchable. Dans le mode de réalisation de la figure 1, il peut y avoir une bascule fournissant son signal de sortie à l'ensemble des cartes mais on peut aussi utiliser une bascule par carte. Dans le mode de réalisation de la figure 2, il y a une bascule monostable pour chaque porte ET correspondante. Chaque bascule monostable peut être, soit extérieure à la carte correspondante, soit portée par cette carte, cette position dépendant du choix qui a été fait pour la position des moyens logiques 10. Les portes et bascules peuvent éventuellement être portées par les cartes elles-mêmes. Dans le mode de réalisation de la figure 3, la bascule reçoit le signal logique du détecteur 15; il n'est pas nécessaire dans ce cas d'utiliser une porte ET 18 et une résistance 19.

La figure 5 représente en a le diagramme du signal logique obtenu à la sortie de la porte 18 des moyens sensibles aux positions des cartes, et en b, le signal fourni par la bascule 17 des moyens de commutation. Le signal représenté sur le diagramme a présente deux états logiques 0 et 1; l'état 0 correspond à l'ouverture de l'interrupteur 6 et l'état 1 corresond à la fermeture de cet interrupteur. Ces états logiques sont aussi ceux qui sont obtenus à la sortie du détecteur 15 de la figure 3, lors du retrait ou de la remise en place d'une carte.

Dans le cas du retrait d'une carte, l'interrupteur est au départ ouvert (1° position de la carte) ce qui correspond à la portion A du diagramme (état logique 0); puis lorsqu'on commence à retirer une carte (2° position de la carte), l'interrupteur se ferme, ce qui correspond à la portion B du diagramme (état logique 1); enfin lorsque la carte est retirée de son connecteur (3° position de la carte), l'interrupteur s'ouvre, ce qui correspond à la position C du diagramme (état logique 0).

Dans le cas de l'insertion d'une carte, au départ, l'interrupteur 6 est ouvert (3° position de la carte), ce qui correspond à la portion A du diagramme, puis l'interrupteur se ferme dès que la carte commence à être insérée dans le connecteur (2° position de la carte), ce qui correspond à la portion B du diagramme; enfin, lorsque la carte est correctement en place (1° position), l'interrupteur 6 s'ouvre, ce qui correspond à la portion C du diagramme. Les passages de l'interrupteur des positions fermée à ouverte et réciproquement, s'accompagnent d'un certain nombre de signaux parasites durant des delais représentés en $t_1$ et $t_2$ sur le diagramme a de la figure 3. On pourrait considérer que l'interrupteur 6 est ouvert pour la deuxième position des cartes et qu'il est fermé dans les première et troisième positions.

Le diagramme b représente le signal fourni par la bascule monostable 17, de type redéclenchable, dont la durée de conduction est supérieure à la durée de maintien de l'état logique 1 du signal de sortie de la porte 18.

Dans le cas du retrait d'une carte, lorsque la sortie de la porte ET 18 passe de l'état 0 à l'état 1, la sortie de la bascule monostable 17 passe aussi de 0 à 1 (la carte passant de la 1° à la 2° position). Si les cartes portent des mémoires et des microprocesseurs par exemple, il est alors effectué au cours d'un intervalle de temps $\Theta_2$ supérieur au temps $t_1$, des opérations de sauvegarde du contenu des mémoires et de mise en attente de tous les processeurs des cartes. Cette mise en attente demeure pendant le temps $\Theta_3$ jusqu'à l'arrêt de la conduction de la bascule. On peut également procéder à un arrêt des alimentations électriques des cartes ou de la carte en cours de retrait (cas de la figure 2). On suppose alors que, lorsque la carte est complétement retirée, (3° position et passage de l'état logique 1 à l'état logique 0 du signal de sortie de la porte 18), la bascule monostable 17 conduit encore pendant un temps $\Theta_4$; ensuite son signal de sortie passe de 1 à 0. Lorsque le signal de sortie de la bascule monostable est retombé à 0, les alimentations électriques des cartes sont remises en marche, si elles avaient été arrêtées, et les processeurs et les contenus des mémoires des autres cartes de l'ensemble, sont réinitialisés. En fait, le signal de sortie de la bascule monostable est transmis à toutes les cartes par un bus commun à tous les connecteurs, dans le cas où il y a un interrupteur unique pour toutes les cartes, la bascule monostable étant elle-même dans ce cas commune à toutes les cartes ou intégré dans chacune des cartes considérée (limitation des risques de fonctionnement). Dans le cas ou il y a un interrupteur de repérage par carte, chaque carte porte elle-même une bascule monostable, et une porte ET 18. Chaque bascule présente alors une durée de conduction qui dépend des opérations à effectuer sur chaque carte en cas de déplacement de l'une des cartes. Le signal de sortie de cette bascule peut éventuellement être transmis aussi aux autres cartes par un bus commun.

Lorsqu'au contraire, une carte qui avait été rétirée, est réintroduite dans son connecteur, le signal logique à la sortie de la porte 18 passe de l'état logique 0 à l'état logique 1, correspondant à la fermeture de l'interrupteur 6 (carte passant d'une 3° position à une 2° position). Ce changement d'état logique déclenche la bascule monostable 17 dont la sortie passe également de l'état logique 0 à l'état logique 1. Cette bascule, comme on l'a indiqué plus haut, présente une durée de conduction $\theta_5$, supérieure à la durée pendant laquelle le signal de sortie de la porte 18 est maintenu au niveau 1. En fait, comme indiqué plus haut cette durée de conduction est supérieure à cette durée de maintien, d'un intervalle de temps $\theta_4$; cet intervalle de temps $\theta_4$ est une sécurité qui permet d'affirmer que les contacts sont de nouveau établis de façon sûre entre les éléments conducteur du connecteur et les éléments conducteurs de la carte (1° position de la carte). Lorsque le signal logique de la bascule monostable retombe à 0, il est possible par la transmission du signal de sortie de la bascule monostable sur le bus commun, de réinitialiser tous les composants de l'ensemble de cartes qui nécessitent une telle réinitialisation et de relancer tous les processus de traitement effectués par ces cartes. Généralement, seule la carte remise en place nécessite une telle réinitialisation, puisque les autres cartes ont déjà été réinitialisées après le retrait de l'une des c⁻⁻tcs.⁻ ⁻

## Revendications

1. Dispositif de repérage de positions de cartes de circuits électriques imprimés par rapport à leurs connecteurs, ces cartes (1) appartenant à un ensemble fonctionnel dans lequel chacune d'elles porte des composants logiques et présénte une surface d'extrémité portant des éléments conducteurs (3) aptes à entrer en contact avec des éléments conducteurs correspondants (4) d'un connecteur électrique (2), les conducteurs correspondants du connecteur (2) et de la carte (1) pouvant occuper trois positions relatives: une première position dite de contacts sûrs entre les éléments conducteurs correspondants du connecteur et de la carte, la carte (1) étant correctement en place par rapport à son connecteur (2), une deuxième position intermédiaire dite de contacts non sûrs entre les éléments conducteurs correspondants du connecteur et de la carte, lorsque celle-ci est en cours de mise en place ou de retrait par rapport à son connecteur, et une troisième position dite de rupture de contacts entre les éléments conducteurs correspondants du connecteur et de la carte, lorsque la carte est complètement en retrait par rapport à son connecteur, caractérisé en ce que le dispositif comporte des moyens (6, 10) sensibles aux positions des cartes pour fournir un signal logique d'indication de position présentant un premier état logique lorsque les cartes occupent la première position ou lorsqu'au moins une carte occupe la troisième position, le signal présentant un deuxième état logique lorsqu'au moins une carte occupe la seconde position intermédiaire.

2. Dispositif de repérage selon la revendication 1, caractérisé en ce que les moyens sensibles aux positions des cartes comprennent au moins un interrupteur (6) présentant un contact (7) ayant une position fixe par rapport à l'ensemble et un contact mobile (8) dont les déplacements par rapport au contact fixe, correspondent à la fermeture ou à l'ouverture de l'interrupteur, le contact mobile (8) étant relié mécaniquement à chacune des cartes, de sorte que l'ouverture corresponde aux première et troisième positions et la fermeture corresponde à la deuxième position ou réciproquement, les contacts (7, 8) étant reliés à des moyens (10) pour fournir ledit signal logique sur une sortie.

3. Dispositif de repérage selon la revendication 2, caractérisé en ce que la sortie des moyens qui fournissent le signal logique, est reliée à des moyens (17) de commutation.

4. Dispositif de repérage selon la revendication 1, caractérisé en ce que les moyens sensibles aux positions des cartes comprennent une source lumineuse (14) et un détecteur électro-optique (15) des positions des cartes, les cartes portant des repères (16) correspondant aux première, deuxième et troisième positions et le détecteur fournissant sur une sortie ledit signal logique correspondant auxdites première, deuxième et troisième positions.

5. Dispositif de repérage selon la revendication 4, caractérisé en ce que la sortie du détecteur (15) est reliée à des moyens de commutation (17).

6. Dispositif de repérage selon l'une quelconque des revendications 3 et 5, caractérisé en ce que les moyens de commutation (17) comprennent au moins un circuit monostable déclenché par le signal logique et présentant une durée de conduction supérieure à la durée de maintien du signal logique entre les première et troisième positions pour effectuer, pour des composants logiques portés par les cartes, des opérations de sauvegarde, d'arrêt de fonctionnement ou de réinitialisation.

## Patentansprüche

1. Vorrichtung zur Ermittlung der Stellung gedruckter elektrischer Schaltkarten gegenüber ihren Verbindern, wobei diese Karten (1) einer Funktionsgruppe angehören, in welcher jede von ihnen logische Bauteile trägt und eine Außenfläche hat, die Leiterelemente (3) trägt, die dazu eingerichtet sind, in Kontakt mit entsprechenden Leiterelementen (4) eines elektrischen Verbinders (2) zu treten, wobei die entsprechenden Leiter des Verbinders (2) und der Karte (1) drei Relativpositionen einnehmen können: eine sogenannte erste Position sicherer Kontakte zwischen den entsprechenden Leiterelementen des Verbinders und der Karte, wobei die Karte (1) gegenüber ihrem Verbinder (2) richtig am Platz ist, eine sogenannte zweite Zwischenposition nicht sicherer Kontakte zwischen den entsprechenden Leiterelementen des Verbinders und der Karte, wenn jene in bezug auf ihren Verbinder an ihren Platz gebracht oder davon entfernt wird, und eine sogenannte dritte Position unterbrochener Kontakte zwischen den entsprechenden Leiterelementen des Verbinders und der Karte, wenn die Karte gegenüber ihrem Verbinder vollständig zurückgezogen ist, dadurch gekennzeichnet, daß die Vorrichtung Einrichtungen (6, 10) enthält, die auf die Kartenpositionen empfindlich sind, um ein logisches Positionsanzeigesignal zu liefern, das einen ersten logischen Zustand aufweist, wenn die Karten die erste Position einnehmen oder wenigstens eine Karte die dritte Position einnimmt, wobei das Signal einen zweiten logischen Zustand aufweist, wenn wenigstens eine Karte die zweite Zwischenposition einnimmt.

2. Ermittlungsvorrichtung nach Anspruch 1, dadurch gekennzeichnet, daß die auf die Kartenpositionen empfindlichen Einrichtungen wenigstens einen Unterbrecher (6) aufweisen, der einen Kontakt (7), der eine in bezug auf die Gruppe feste Stellung hat, und einen beweglichen Kontakt (8) hat, dessen Stellungen gegenüber dem festen Kontakt dem Schließen oder dem Öffnen des Unterbrechers entsprechen, wobei der bewegliche Kontakt (8) mechanisch mit jeder der Karten so verbunden ist, daß das Öffnen den ersten und dritten Positionen und das Schließen der zweiten Position oder umgekehrt entspricht, wobei die Kontakte (7, 8) mit Einrichtungen (10) verbunden sind, um das genannte logische Signal an einen Ausgang zu liefern.

3. Ermittlungsvorrichtung nach Anspruch 2, dadurch gekennzeichnet, daß der Ausgang der Einrichtungen, die das logische Signal liefern, mit Umschalteinrichtungen (17) verbunden ist.

4. Ermittlungsvorrichtung nach Anspruch 1, dadurch gekennzeichnet, daß die auf die Kartenpositionen empfindlichen Einrichtungen eine Lichtquelle (14) und einen elektrooptischen Kartenpositionsdetektor (15) aufweisen, wobei die Karten den ersten, zweiten und dritten Positionen entsprechende Markierungen (16) aufweisen und der Detektor an einem Ausgang das genannte logische Signal liefert, das den ersten, zweiten und dritten Positionen entspricht.

5. Ermittlungsvorrichtung nach Anspruch 4, dadurch gekennzeichnet, daß der Ausgang des Detektors (15) mit den Umschalteinrichtungen (17) verbunden ist.

6. Ermittlungsvorrichtung nach einem der Ansprüche 3 und 5, dadurch gekennzeichnet, daß die Umschalteinrichtungen (17) wenigstens einen monostabilen Schaltkreis enthalten, der durch das logische Signal getriggert wird und eine Leitfähigkeitszeit aufweist, die größer als die Haltezeitdauer des logischen Signals zwischen den ersten und dritten Positionen ist, um für die von den Karten getragenen logischen Komponenten Sicherungsoperationen, eine Funktionssperrung oder eine Reinitialisierung auszuführen.

**Claims**

1. Apparatus for registering the positions of printed electric circuit boards with respect to their connectors, said circuit boards (1) belonging to a functional assembly in which each of them carries logic components and has an end surface with conductor elements (3) adapted to contact corresponding conductor elements (4) of an electrical connector (2), the corresponding conductors of the connector (2) and the circuit board (1) being able to occupy three relative positions: a first position indicative of definite contact between the corresponding conductor elements of the connector and the circuit board, the circuit board (1) being correctly positioned with respect to its connector (2), a second intermediate position indicative of non-definite contact between the corresponding conductor elements of the connector and the circuit board, when the board is in process of being placed in position or being withdrawn with respect to its connector, and a third position, indicative of broken contact between the corresponding conductor elements of the connector and the circuit board, when the circuit board is completely withdrawn with respect to its connector, characterised in that the apparatus comprises means (6, 10), sensitive to the positions of the circuit boards, for providing a position-indicating logic signal, exhibiting a first logic state when the circuit boards are in the first position or when at least one circuit board is in the third position, and exhibiting a second logic state when at least one circuit board is in the second intermediate position.

2. Registration apparatus according to claim 1, characterised in that the means sensitive to the positions of the circuit boards comprise at least one interruptor (6) with a contact (7) having a fixed position with respect to the assembly, and a moveable contact (8) whose movements with respect to the fixed contact correspond to closing or to opening of the interruptor, the moveable contact (8) being mechanically connected to each of the circuit boards whereby opening corresponds to the first and third positions, and closing corresponds to the second position, or vice versa, the contacts (7, 8) being connected to means (10) for providing said logic signal at an output.

3. Registration apparatus according to claim 2, characterised in that the output of the means providing the logic signal is connected to a commutation means (17).

4. Registration apparatus according to claim 1, characterised in that the means sensitive to the positions of the circuit boards comprise a light source (14) and a photo-electric detector (15) of the positions of the circuit boards, the circuit boards having registration means (16) corresponding to the first, second, and third positions, and the detector providing at an output said logic signal corresponding to said first, second, and third positions.

5. Registration apparatus according to claim 4, characterised in that the output of the detector (15) is connected to the commutation means (17).

6. Registration apparatus according to either of claims 3 and 5, characterised in that the commutation means (17) comprise at least one monostable circuit released by the logic signal and having a conduction period greater than the period of maintenance of the logic signal between the first and third positions, to carry out the operations of protection, cessation of functioning or reinitialisation for the logic components carried on the circuit boards.

# FIG.1

# FIG.2

## FIG.3

## FIG.4

## FIG.5